# EUROPÄISCHE PATENTANMELDUNG

(11) **EP 4 726 356 A1**
(43) Veröffentlichungstag der Anmeldung: **15.04.2026**
(21) Anmeldenummer: 24205701.6
(22) Anmeldetag: 09.10.2024
(51) Int. Cl.: G01N 11/00, G01N 35/00

(54) **RHEOMETERVORRICHTUNG UND VERFAHREN ZUR ERMITTLUNG VON RHEOLOGISCHEN EIGENSCHAFTEN VON PROBEN**

(71) Anmelder: Netzsch Gerätebau GmbH, 95100 Selb (DE)
(72) Erfinder: Küspert, Sabrina, 95100 Selb (DE); Rummel, Florian, 95100 Selb (DE); Szántó, Levente, 95028 Hof (DE); Taubmann, Rebekka, 95100 Selb (DE)
(74) Vertreter: Isarpatent

(57) **Zusammenfassung**

Die vorliegende Erfindung betrifft eine Rheometervorrichtung (1) zur Ermittlung von rheologischen Eigenschaften von Proben. Solch eine Rheometervorrichtung (1) umfasst dabei wenigstens eine Messeinheit (2), eine Aufnahmevorrichtung (3) mit wenigstens einer Antriebseinheit (4) und eine Auswerteeinheit (7) mit Auswerteprogramm (8), welche jeweils mit der wenigstens einen Messeinheit (2) und der Aufnahmevorrichtung (3) gekoppelt ist. Dabei ist die Aufnahmevorrichtung (3) ausgelegt, mehrere, sich zumindest teilweise voneinander unterscheidende Probengefäße (5) mit jeweiligen Probeinhalten (6) aufzunehmen und definiert zu bewegen, sodass simultan Messungen an einer Vielzahl von Probeinhalten (6) in den jeweiligen Probengefäßen (5) parallel durchführbar sind. Zudem wird ein entsprechendes Verfahren M offenbart.

## Beschreibung

### TECHNISCHES GEBIET DER ERFINDUNG

Die vorliegende Erfindung betrifft eine Rheometervorrichtung sowie ein Verfahren zur Ermittlung von rheologischen Eigenschaften von Proben.

### ALLGEMEINER STAND DER TECHNIK

Für die Messung von rheologischen Eigenschaften, wie beispielsweise allgemein Viskositäten, Scherviskositäten, Dehnviskositäten, Schubspannungen, viskoelastische Eigenschaften werden zu untersuchende Proben aus ihrem Aufbewahrungsgefäß entnommen und anschließend in einer dafür geeigneten Apparatur, beispielsweise einem Rheometer, platziert. Typischerweise werden die Proben zum Zwecke der Messung der zuvor genannten Eigenschaften in eine Oszillation/ Schwingung versetzt. Alternativ können sie auch in Rotation oder Dehnung versetzt werden.

Entsprechend sind aus dem Stand der Technik bereits diverse Rotationsrheometer, Kapillarrheometer, Kugelfallviskosimeter oder allgemein mikrofluidische Geräte bekannt. Die dabei durchgeführten Messungen umfassen häufig sowohl absolute als auch relative Messwerte.

Die Herausnahme von jeweiligen Proben aus ihrem Aufbewahrungsgefäß bedingt nicht nur einen gewissen technischen Aufwand, sondern führt auch zu einem erhöhten Zeitaufwand. Zudem können jeweilige Proben durch die Entnahme aus ihrem jeweiligen Aufnahmegefäß in ihrer Struktur beeinträchtigt werden, was im schlimmsten Fall zu einer Verfälschung der Ergebnisse führen kann. Neben physikalischen Beeinträchtigungen können auch chemische oder biologische Beeinträchtigungen von den jeweiligen Proben durch Entnahmevorgänge auftreten.

Typischerweise können bei den zuvor genannten Geräten gemäß dem Stand der Technik jeweilige Proben nur sequentiell vermessen beziehungsweise rheologisch untersucht werden, was zusätzlich den zeitlichen Aufwand und somit die Kosten pro Probeergebnis erhöht. Zudem ist bei beispielsweise zeitlich instabilen Proben die Vergleichbarkeit eingeschränkt, wenn nicht gegeben ist, dass zu einem absolut gleichen Zeitpunkt gemessen wird. Allgemein sind somit auch insgesamt eine Reproduktivität und eine Standardisierung von Probeauftragens bei den bisher bekannten Lösungen als problematisch anzusehen.

In gewissen Sonderfällen wird zudem eine gewisse Mindestmenge an Probenvolumen für eine korrekte Messung benötigt. Dies kann beispielsweise dann der Fall sein, wenn vor allem auf mechanischen Größen, wie etwa Kraftmessungen, beruhende Methoden angewandt werden. Dabei wird die gewisse Mindestmenge an Probenvolumen benötigt, um überhaupt ein zu messendes Signal in einer relevanten Größenordnung zu generieren.

### KURZDARSTELLUNG DER ERFINDUNG

Vor diesem Hintergrund liegt der vorliegenden Erfindung die Aufgabe zugrunde, eine Rheometervorrichtung und ein entsprechendes Verfahren bereitzustellen, welche die zuvor genannten Nachteile zumindest teilweise überkommen.

Diese Aufgabe wird gelöst durch eine Rheometervorrichtung mit den Merkmalen des Patentanspruchs 1 sowie durch ein Verfahren mit den Merkmalen des Patentanspruchs 14.

Dementsprechend ist eine Rheometervorrichtung zur Ermittlung von rheologischen Eigenschaften von Proben vorgesehen. Solch eine Rheometervorrichtung umfasst wenigstens eine Messeinheit, eine Aufnahmevorrichtung mit wenigstens einer Antriebseinheit und eine Auswerteeinheit mit Auswerteprogramm, welche jeweils mit der wenigstens einen Messeinheit und der Aufnahmevorrichtung gekoppelt ist. Dabei ist die Aufnahmevorrichtung ausgelegt, mehrere, sich zumindest teilweise voneinander unterscheidende Probengefäße mit jeweiligen Probeinhalten aufzunehmen und definiert zu bewegen, sodass simultan Messungen an einer Vielzahl von Probeinhalten in den jeweiligen Probengefäßen parallel durchführbar sind.

Des Weiteren ist ein entsprechendes Verfahren zur Ermittlung von rheologischen Eigenschaften von Proben vorgesehen. Solch ein Verfahren umfasst dabei die folgenden Schritte: Bereitstellen einer erfindungsgemäßen Rheometervorrichtung; Platzieren von mehreren, sich zumindest teilweise voneinander unterscheidenden Probengefäßen mit jeweiligen Probeinhalten auf einer für diese Zwecke ausgelegten Aufnahmevorrichtung der erfindungsgemäßen Rheometervorrichtung; Aktivieren der Aufnahmevorrichtung; Aktivieren und Koppeln wenigstens einer Messeinheit der erfindungsgemäßen Rheometervorrichtung mit der Aufnahmevorrichtung; Aktivieren und Koppeln einer Auswerteeinheit mit Auswerteprogramm der erfindungsgemäßen Rheometervorrichtung mit der Aufnahmevorrichtung und der wenigstens einen Messeinheit; Paralleles und optional simultanes Durchführen von rheologischen Messungen an einer Vielzahl von Probeinhalten in den jeweiligen Probengefäßen mittels der wenigstens einen Messeinheit; Auswerten und Ausgeben der durchgeführten Messungen mittels der Auswerteeinheit mit Auswerteprogramm der erfindungsgemäßen Rheometervorrichtung in Echtzeit.

Eine der Erfindung zugrunde liegenden Idee besteht darin, technische Lösungen bereitzustellen, welche es erlauben, simultan mehrere Proben rheologisch zu untersuchen. Die Proben können dabei in verschiedenen und somit mehreren Probengefäßen untergebracht sein und trotzdem simultan, sprich im Wesentlichen gleichzeitig, rheologisch untersucht werden.

Auf diese Weise ist es möglich eine Vielzahl von unterschiedlichen Proben in einem im Wesentlichen gleichen Zeitintervall zu untersuchen, sodass der mit den Messungen einhergehende zeitliche Aufwand gegenüber herkömmlichen Untersuchungsmethoden mit Geräten aus dem Stand der Technik optimiert und somit ein benötigter Zeitaufwand beziehungsweise damit einhergehende Kosten pro zu untersuchender Probe reduziert werden können.

Dabei ist vorgesehen, dass die Aufnahmevorrichtung ausgelegt ist, mehrere, sich zumindest teilweise voneinander unterscheidende Probengefäße mit jeweiligen Probeinhalten aufzunehmen und anschließend mittels ihrer wenigstens einen Antriebseinheit zu bewegen. Dies schließt nicht aus, dass auch im Wesentlichen baugleiche Probengefäße mit jeweiligen Probeinhalten aufgenommen werden können und entsprechend im Sinne der vorliegenden Erfindung behandelt werden können. Die Bewegungen werden entsprechend auf die Proben übertragen und rheologische Messungen sind mittels der Messeinheit in Kombination mit der Auswerteeinheit mit Auswerteprogramm simultan durchführbar.

Mit anderen Worten werden die Bewegungen der angetriebenen Aufnahmevorrichtung auf die in den oder dem Probengefäß befindlichen Proben beziehungsweise das dort befindliche Material übertragen, sodass parallel, insbesondere in Echtzeit, an mehreren Proben rheologische Messungen mittels der erfindungsgemäßen Rheometervorrichtung durchführbar sind.

Gemäß eines Ausführungsbeispiels der Rheometervorrichtung ist die wenigstens eine Messeinheit oberhalb der Aufnahmevorrichtung angeordnet, sodass kontaktlose Messungen an der Vielzahl von Probeinhalten in den jeweiligen Probengefäßen durchführbar sind.

Kontaktlose Messungen bieten den großen Vorteil, dass die Proben nicht weiter durch Bestandteile der Messvorrichtung berührt werden müssen, sodass keine Beeinträchtigung von Strukturen der Probe zu befürchten sind. Auch können somit chemische oder biologische Beeinträchtigungen auf ein Minimum reduziert werden. Zumindest können diese Beeinträchtigung nicht dadurch entstehen, dass ein oder mehrere Bestandteile der Messvorrichtung mit den Proben in Kontakt zu bringen sind. Auch können jeweilige Proben in ihren jeweiligen Probengefäßen verbleiben, solange ein Zugang in Richtung Messvorrichtung gewährleistet wird.

Gemäß einer Weiterbildung der Rheometervorrichtung ist die wenigstens eine Messeinheit ausgewählt aus: Kameravorrichtung, Mikroskopvorrichtung, Fluoreszenzmikroskop, Ramanvorrichtung.

Diese jeweiligen Optionen ermöglichen auf vorteilhafte Weise bildgebende Verfahren durchzuführen, sodass anschließend oder sogar in Echtzeit eine Auswertung von rheologischen Verhalten der Proben mittels der Auswerteeinheit mit Auswerteprogramm möglich sind. Dadurch, dass die jeweiligen Bestandteile der vorgestellten Rheometervorrichtung miteinander gekoppelt sind, können entsprechend jeweilige Informationen der einzelnen Bestandteile derart zusammengeführt werden, sodass Aussagen über rheologisches Verhalten von den jeweiligen Proben getroffen werden können.

Gemäß eines Ausführungsbeispiels der Rheometervorrichtung ist die Aufnahmevorrichtung mittels wenigstens einer Antriebseinheit definiert in wenigstens eine Richtung bewegbar, sodass diese Bewegungen an in der Aufnahmevorrichtung platzierte Probengefäße zumindest anteilig übertragbar sind und somit die Probeinhalte in den Probengefäßen definiert in Bewegung versetzbar sind.

Die Bewegungen können somit auf die Probengefäße und somit indirekt auf die sich dort befindlichen Proben übertragen werden. Diese übertragenen Bewegungen können beispielsweise die jeweiligen Proben beziehungsweise das sich dort befindliche Material in Schwingungen oder in Bewegungen in lediglich eine Richtung versetzen. Dadurch, dass auch mehrere Antriebseinheiten für diese Einbringung von Bewegungen beziehungsweise Bewegungsimpulsen sorgen können, sind auch definierte überlagerte Bewegungen in unterschiedlichen Koordinatensystemen (zum Beispiel kartesisch) durchführbar. Die Aufnahmevorrichtung mittels wenigstens einer Antriebseinheit kann insofern ähnlich einem elektrisch verfahrbarem Tisch oder dergleichen oder ähnlich einem verfahrbarem Mikroskop-Tisch oder dergleichen ausgelegt beziehungsweise zumindest in Teilen derart konzipiert sein.

Die bietet den Vorteil, dass somit noch mehr Informationen über die zu bemessenden Proben gemessen beziehungsweise ermittelt werden können, sodass detaillierte Analysen durchgeführt werden können.

Gemäß einer Weiterbildung der Rheometervorrichtung sind die unterschiedlichen Probengefäße ausgewählt aus: Well-Platten, Mikrofluidkammern, Well-Platten mit integrierten Mikrofluidkammern, 96-Well-Platten, 384-Well-Platten, Fläschchen für Medikamente, Falcon-Röhrchen, Objektträger.

In dieser besonderen Ausführungsform umfasst somit die Aufnahmevorrichtung entsprechend Mittel, sodass diese genannten unterschiedlichen Probengefäßen gleichzeitig aufgenommen werden können und somit parallel jeweilige Messungen an den in diesen unterschiedlichen Probengefäßen sich befindlichen Proben durchführbar sind.

Auch ist vorstellbar, dass sich gleichartige oder sogar im Wesentlichen gleiche Probeinhalte in unterschiedlichen Probengefäßen befinden, wobei die mittels der wenigstens einen Messeinheit registrierten Bewegungen von der Auswerteeinheit mit Auswerteprogramm entsprechend auf vielfältige Weise ausgewertet werden können, sodass besonders detaillierte Messergebnisse hervorbringbar sind.

Gemäß eines Ausführungsbeispiels der Rheometervorrichtung sind wenigstens zwei Messeinheiten parallel aktivierbar, sodass zumindest teilweise eine parallele Auswertung der jeweiligen Messungen der wenigstens zwei Messeinheiten mittels der Auswerteeinheit mit Auswerteprogramm in Echtzeit durchführbar ist.

Auf diese Weise sind noch detailliertere Messungen durchführbar, sodass entsprechend eine noch schnellere und effizientere rheologische Charakterisierung der jeweiligen Proben simultan möglich ist.

Gemäß einer Weiterbildung der Rheometervorrichtung umfasst diese wenigstens eine mit der Auswerteeinheit mit Auswerteprogramm koppelbare Beleuchtungseinheit, sodass die zu bemessenden Probeinhalte in den unterschiedlichen Probengefäßen während des Messvorgangs definiert beleuchtbar sind.

Auf diese Weise können Reaktionen in den jeweiligen Proben beziehungsweise dem sich dort befindlichen Material ausgelöst werden, welche entsprechend der Reaktion oder Reaktionen das rheologische Verhalten der jeweiligen Proben verändern und rheologisch oder zusätzlich mit weiteren Methoden (beispielsweise simultan) untersucht werden können.

Gemäß eines Ausführungsbeispiels der Rheometervorrichtung ist die wenigstens eine Beleuchtungseinheit ausgewählt aus: UV-Licht-Beleuchtungseinheit, Beleuchtungseinheit, welche ausgelegt ist, sichtbares Licht zu emittieren, Beleuchtungseinheit, welche ausgelegt ist, infrarotes Licht zu emittieren, Beleuchtungseinheit, welche ausgelegt ist, polarisiertes Licht zu emittieren, Beleuchtungseinheit, welche ausgelegt ist, fluoreszierendes Licht, insbesondere blaues, grünes oder rotes fluoreszierendes Licht, zu emittieren.

Die einzelnen Proben beziehungsweise das dort sich befindliche Material kann somit mit UV-Licht bestimmter Wellenlänge oder mit UV-Licht mit einem bestimmten Lichtspektrum bestrahlt werden, sodass mittels Messeinrichtung und Auswerteeinheit mit Auswerteprogramm weitere Ergebnisse ermittelt werden können. Es kann auch eine Fluoreszenz-Anregung vorgesehen sein, wobei hierfür die entsprechende Beleuchtungseinheit zu aktivieren ist.

Gemäß einer Weiterbildung der Rheometervorrichtung umfasst diese wenigstens eine weitere Anregungseinheit, welche kontaktlos zu den Probengefäßen angeordnet ist, sodass die Probeinhalte in den unterschiedlichen Probengefäßen mittels der wenigstens einen weiteren Anregungseinheit kontaktlos definiert in Bewegung versetzbar sind.

Die einzelnen Proben beziehungsweise das sich dort befindliche Material kann somit auf weitere Arten und Weisen angeregt werden, sodass mittels Messeinrichtung und Auswerteeinheit mit Auswerteprogramm weitere Ergebnisse ermittelt werden können. Dies kann parallel zu den eigentlich eingebrachten Bewegungen mittels der Antriebseinheiten der Aufnahmevorrichtung vorgesehen sein. Auch sind zumindest teilweise nacheinander folgende jeweilige eingebrachte Stimulationen der jeweiligen Proben denkbar, sodass entsprechend noch mehr Informationen für die eigentliche rheologische Charakterisierung ermittelbar sind.

Gemäß eines Ausführungsbeispiels der Rheometervorrichtung ist die wenigstens eine weitere Anregungseinheit ausgewählt aus: elektromagnetische Anregungseinheit.

Der Vorteil einer elektromagnetischen Anregungseinheit besteht vor allem darin, dass diese stufenlos und leicht zu bedienen ist, um letztendlich den gewünschten Effekt zu bewirken. Ein Einsatz ist in dieser speziellen Ausführungsform insbesondere dann sinnvoll, wenn in den zu bemessenden Proben zumindest anteilig Materialien vorhanden sind, welche sich mittels dieser Technik kontaktlos in Schwingungen bringen lassen, sodass somit rheologische Messungen überhaupt durchführbar sind.

Gemäß einer Weiterbildung der Rheometervorrichtung umfasst diese eine Prüfkammer mit Mitteln zur Regelung von Umgebungsbedingungen innerhalb dieser Prüfkammer, in welcher zumindest eine der zuvor genannten Bestandteile der erfindungsgemäßen Rheometervorrichtung jeweils zumindest anteilig positionierbar ist, sodass wenigstens eine Umgebungsbedingung der in der Prüfkammer platzierten Probeinhalten in den Probengefäßen mittels der Prüfkammer definiert regelbar ist.

Auf diese Weise sind weitere Faktoren für die rheologische Charakterisierung der jeweiligen Proben steuerbar, sodass entsprechend noch mehr Informationen für die eigentliche rheologische Charakterisierung ermittelbar sind.

Gemäß eines Ausführungsbeispiels der Rheometervorrichtung sind die regelbaren Umgebungsbedingungen innerhalb der Prüfkammer ausgewählt aus: Temperatur, Druck, relative Luftfeuchtigkeit, (Inert-) Gasatmosphäre.

Die zuvor genannten Vorteile sind somit noch besser erreichbar.

Gemäß einer Weiterbildung der Rheometervorrichtung umfasst die Auswerteeinheit mit Auswerteprogramm wenigstens ein rheologisches Berechnungsmodell zur Berechnung von wenigstens einer rheologischen Eigenschaft der Probeinhalte, wobei die erfindungsgemäße Rheometervorrichtung ausgelegt ist, eine automatische Auswahl der rheologischen Berechnungsmodelle in Abhängigkeit eines jeweils detektierten Probengefäßes durchzuführen.

Somit können die mittels der wenigstens einen Messeinheit ermittelten Informationen besonders gezielt eingesetzt werden, um eine schnelle und effiziente rheologische Charakterisierung der jeweiligen Proben simultan mittels der vorgestellten Rheometervorrichtung durchzuführen. Die weitgehende Automatisierung mittels derer jeweilige Probengefäße erkannt werden, führt dabei insbesondere zu einer schnellen und effizienten Durchführung der gewünschten Messungen.

Gemäß einer Weiterbildung des vorgestellten Verfahrens wird die wenigstens eine Messeinheit oberhalb der Aufnahmevorrichtung angeordnet, sodass ein kontaktloses Messen an der Vielzahl von Probeinhalten durchgeführt werden kann.

Kontaktlose Messungen bieten, wie bereits im Zusammenhang mit der erfindungsgemäßen Vorrichtung benannt, den großen Vorteil, dass die Proben nicht weiter durch Bestandteile der Messvorrichtung berührt werden müssen, sodass keine Beeinträchtigung von Strukturen der Probe zu befürchten sind.

Auch können somit chemische oder biologische Beeinträchtigungen auf ein Minimum reduziert werden. Zumindest können diese Beeinträchtigung nicht dadurch entstehen, dass ein oder mehrere Bestandteile der Messvorrichtung mit den Proben in Kontakt zu bringen sind. Auch können jeweilige Proben in ihren jeweiligen Probengefäßen verbleiben, solange ein Zugang in Richtung Messvorrichtung gewährleistet wird. Somit resultiert ein besonders zuverlässiges und kostengünstiges Verfahren.

Gemäß eines Ausführungsbeispiels des erfindungsgemäßen Verfahrens werden Bewegungen der Aufnahmevorrichtung mittels wenigstens einer Antriebseinheit der Aufnahmevorrichtung bewirkt und zumindest anteilig auf die Probengefäße und somit auf die in den Probengefäßen vorhandenen Probeinhalte definiert übertragen, wobei jeweilige Messungen der wenigstens einen Messeinheit in Abhängigkeit der jeweiligen Bewegungen durchgeführt werden.

Die Bewegungen können somit auf die Probengefäße und somit indirekt auf die dort sich befindlichen Proben übertragen werden. Diese übertragenen Bewegungen können beispielsweise die jeweiligen Proben beziehungsweise das dort sich befindliche Material in Schwingungen versetzen. Dadurch, dass auch mehrere Antriebseinheiten für diese Einbringung von Bewegungen beziehungsweise Bewegungsimpulsen sorgen können, sind auch definierte überlagerte Bewegungen in unterschiedlichen Koordinatensystemen (zum Beispiel kartesisch) durchführbar.

Gemäß einer Weiterbildung des vorgestellten Verfahrens werden jeweilige Messungen mittels wenigstens zwei parallel aktivierter Messeinheiten durchgeführt, sodass zumindest teilweise eine parallele Auswertung der jeweiligen Messungen der wenigstens zwei Messeinheiten mittels der Auswerteeinheit mit Auswerteprogramm in Echtzeit durchgeführt werden kann.

Auf diese Weise können mittels des vorgestellten Verfahrens noch detailliertere Messungen durchgeführt werden, sodass entsprechend eine noch schnellere und effizientere rheologische Charakterisierung der jeweiligen Proben simultan möglich ist.

Gemäß eines Ausführungsbeispiels des erfindungsgemäßen Verfahrens werden die zu bemessenden Probeinhalte in den unterschiedlichen Probengefäßen während des Messvorgangs definiert mittels wenigstens einer mit der Auswerteeinheit mit Auswerteprogramm koppelbaren Beleuchtungseinheit der erfindungsgemäßen Rheometervorrichtung beleuchtet.

Auf diese Weise können Reaktionen in den jeweiligen Proben beziehungsweise dem dort sich befindlichen Material ausgelöst werden, welche entsprechend der Reaktion oder Reaktionen das rheologische Verhalten der jeweiligen Proben verändern und rheologisch oder zusätzlich mit weiteren Methoden (beispielsweise simultan) untersucht werden können.

Gemäß einer Weiterbildung des vorgestellten Verfahrens wird wenigstens eine weitere Anregungseinheit der erfindungsgemäßen Rheometervorrichtung aktiviert, welche kontaktlos zu den Probengefäßen angeordnet wird oder welche zumindest teilweise in Kontakt zu den Probegefäßen oder zu den Probeinhalten oder zumindest teilweise in Kontakt zu den Probegefäßen und zumindest teilweise zu den Probeinhalten angeordnet wird, sodass die Probeinhalte in den unterschiedlichen Probengefäßen mittels der weiteren Anregungseinheit kontaktlos definiert in Bewegung versetzt werden können.

Die einzelnen Proben beziehungsweise das dort sich befindliche Material kann somit auf weitere Arten und Weisen angeregt werden, sodass mittels Messeinrichtung und Auswerteeinheit mit Auswerteprogramm weitere Ergebnisse ermittelt werden können. Dies kann parallel zu den eigentlich eingebrachten Bewegungen mittels der Antriebseinheiten der Aufnahmevorrichtung vorgesehen sein. Auch sind zumindest teilweise nacheinander folgende, jeweilige eingebrachte Stimulationen der jeweiligen Proben denkbar, sodass entsprechend noch mehr Informationen für die eigentliche rheologische Charakterisierung ermittelt werden können.

Gemäß einer Weiterbildung des vorgestellten Verfahrens wird wenigstens ein rheologisches Berechnungsmodell zur Berechnung von wenigstens einer rheologischen Eigenschaft der Probeinhalte durch die Auswerteeinheit mit Auswerteprogramm in Abhängigkeit eines jeweils mittels der erfindungsgemäßen Rheometervorrichtung detektierten Probengefäßes ausgewählt.

Somit können die mittels der wenigstens einen Messeinheit ermittelten Informationen besonders gezielt eingesetzt werden, um eine schnelle und effiziente rheologische Charakterisierung der jeweiligen Proben simultan mittels der vorgestellten Rheometervorrichtung durchzuführen. Die weitgehende Automatisierung mittels derer jeweilige Probengefäße erkannt werden, führt dabei insbesondere zu einer schnellen und effizienten Durchführung der gewünschten Messungen.

### KURZBESCHREIBUNG DER ZEICHNUNGEN

Die Erfindung wird ausführlicher mit Verweis auf beispielhafte Ausführungsformen beschrieben, die in den beiliegenden Zeichnungen dargestellt sind.

Die beiliegenden Zeichnungen sind enthalten, um ein weiteres Verständnis dieser Erfindung zu ermöglichen und sind in diese Beschreibung einbezogen und stellen einen Teil davon dar. Die Zeichnungen illustrieren die Ausführungsformen dieser Erfindung und dienen gemeinsam mit der Beschreibung der Erklärung der Grundsätze der Erfindung.

Andere Ausführungsformen dieser Erfindung und viele der vorgesehenen Vorteile dieser Erfindung sind leicht zu verstehen, wenn sie durch Verweis auf die folgende ausführliche Beschreibung besser verständlich werden. Die Elemente der Zeichnungen sind nicht notwendigerweise im gleichen Maßstab zueinander gezeichnet. Gleiche Bezugszeichen bezeichnen entsprechend ähnliche Teile.
- Fig. 1: eine schematische Darstellung einer Rheometervorrichtung gemäß einem Ausführungsbeispiel der vorliegenden Erfindung;
- Fig. 2: ein schematisches Flussdiagramm für ein Verfahren zur Ermittlung von rheologischen Eigenschaften von Proben gemäß einem Ausführungsbeispiel der vorliegenden Erfindung.

In den Figuren bezeichnen gleiche Bezugszeichen gleiche oder funktional ähnliche Bauteile, wenn nicht anders angegeben. Alle Richtungsbezeichnungen, wie "oben", "unten", "links", "rechts", "über", "unter", "horizontal", "vertikal", "hinten", "vorne" und ähnliche Begriffe werden nur zur Erklärungszwecken verwendet und sollen die Ausführungsformen nicht auf die spezifischen Anordnungen beschränken, die in den Zeichnungen dargestellt sind.

### AUSFÜHRLICHE BESCHREIBUNG VON AUSFÜHRUNGSBEISPIELEN DER ERFINDUNG

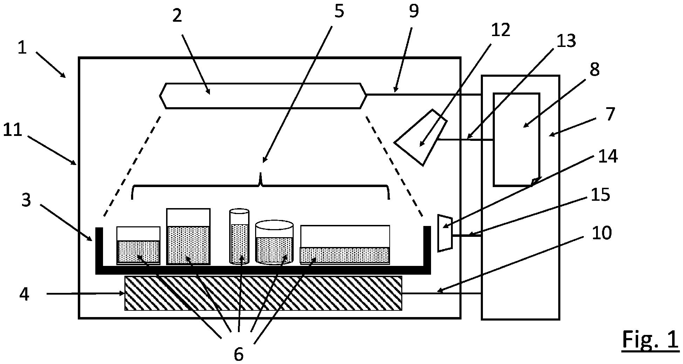

Fig. 1 zeigt eine schematische Darstellung einer Rheometervorrichtung 1 gemäß einem Ausführungsbeispiel der vorliegenden Erfindung. Die Rheometervorrichtung 1 ist dabei mit einer Messeinheit 2 und einer Aufnahmevorrichtung 3 mit einer Antriebseinheit 4 dargestellt.

In nicht näher dargestellten Ausführungsformen ist jedoch vorstellbar, dass mehr als eine Messeinheit 2, beispielsweise zwei oder drei, und mehr als eine Antriebseinheit 4, beispielsweise zwei oder drei, vorgesehen sind. Auch ist vorstellbar, dass die weiteren Antriebseinheiten 4 etwa zumindest anteilig seitlich der Aufnahmevorrichtung 3 angeordnet vorgesehen sind.

Des Weiteren ist vorstellbar, dass wenigstens eine Antriebseinheiten 4 seitlich der Aufnahmevorrichtung 3 und wenigstens eine Antriebseinheiten 4 unterhalb der Aufnahmevorrichtung 3 angeordnet ist, jeweils so mit der Aufnahmevorrichtung 3 gekoppelt oder verbunden, sodass Bewegungen oder allgemein Bewegungsimpulse oder dergleichen der Antriebseinheiten 4 auf die Aufnahmevorrichtung 3 und somit auf Gegenstände, welche auf der Aufnahmevorrichtung 3 angeordnet sind, übertragen werden können.

In der Aufnahmevorrichtung 3 sind insgesamt fünf unterschiedliche Probengefäßen 5 platziert dargestellt, wobei in jeder der Probengefäßen 5 jeweils Probeinhalte 6 vorgesehen sind. Die Probeinhalte 6 können sich beispielsweise jeweils voneinander unterscheiden. Auch ist denkbar, dass sie zumindest anteilig gleich sind. Dies hat beispielsweise den Vorteil, dass ein jeweiliges rheologisches Verhalten je nach Probengefäß 5 und Füllungsgrad darin untersuchbar ist. Insofern kann die Aufnahmevorrichtung 3 auch lediglich ein Probengefäß 5 oder eine Vielzahl von gleichartigen Probengefäßen 5 aufnehmen.

Die Aufnahmevorrichtung 3 ist hier stark vereinfacht im Wesentlichen wannenförmig dargestellt, wobei sie jedoch ausgelegt ist, mehrere, sich zumindest teilweise voneinander unterscheidende Probengefäße 5 mit jeweiligen Probeinhalten 6 aufzunehmen und definiert zu bewegen, sodass simultan Messungen an einer Vielzahl von Probeinhalten 6 in den jeweiligen Probengefäßen 5 parallel durchführbar sind. Alternativ kann die Aufnahmevorrichtung 3 auch andere Formen aufweisen. Beispielsweise kann die Aufnahmevorrichtung 3 eine im Wesentlichen runde oder ovale Auflagefläche für die sich zumindest teilweise voneinander unterscheidenden Probengefäße 5 mit jeweiligen Probeinhalten 6 aufweisen.

In einer nicht näher dargestellten Ausführungsform ist beispielsweise vorstellbar, dass die Aufnahmevorrichtung 3 für jeweils unterschiedliche Probengefäße 5 und deren Formgebung Platzhalter, beispielsweise Vertiefungen oder dergleichen, aufweist, sodass je nach Form und Art und Weise der Probengefäße 5 ein jeweiliges Probengefäße 5 sicher an einem speziell dafür vorgesehenen Platz in der Aufnahmevorrichtung 3 anordenbar ist. Dies bietet den Vorteil, dass auch während der mittels der wenigstens eine Antriebseinheit 4 bewirkten und übertragenen Bewegungen diese angeordneten Probengefäße 5 sicher, vor allem vor einem Umstürzen oder dergleichen, in der Aufnahmevorrichtung 3 anordenbar sind.

Auch ist vorstellbar, dass die Aufnahmevorrichtung 3 eine Art verstellbares Gerüst oder Einspannelemente oder dergleichen umfasst, sodass die angeordneten Probengefäße 5 sicher, vor allem vor einem Umstürzen oder dergleichen, in der Aufnahmevorrichtung 3 anordenbar sind.

Die Messeinheit 2 ist oberhalb der Aufnahmevorrichtung 3 angeordnet dargestellt, sodass kontaktlose Messungen an der Vielzahl von Probeinhalten 6 in den jeweiligen Probengefäßen 5 durchführbar sind.

Die wenigstens eine Messeinheit 2 kann beispielsweise eine Kameravorrichtung oder eine Mikroskopvorrichtung sein. Auch eine Kombination aus diesen beiden Geräten ist vorstellbar. Auch ist vorstellbar, dass wenigstens zwei Kameravorrichtungen und/ oder wenigstens zwei Mikroskopvorrichtungen vorgesehen sind. Auch ist vorstellbar, dass wenigstens zwei Kameravorrichtungen mit jeweils sich unterscheidenden Kamerawinkeln in Bezug auf einen jeweiligen Aufnahmebereich vorgesehen sind, sodass die aufzunehmenden Probeinhalte 6, insbesondere während ihrer Bewegungsabläufe, von zwei sich unterscheidenden Perspektiven aufgenommen werden können. Auch ist vorstellbar, dass etwa ein Fluoreszenzmikroskop, eine Ramanvorrichtung und wenigstens eine Kameravorrichtung vorgesehen sind.

In diesem Zusammenhang ist auch vorstellbar, dass jeweilige Probeninhalte 6 nur an der Oberfläche erfasst werden. Auch ist jedoch vorstellbar, dass jeweilige Probeninhalte 6 sowohl an der Oberfläche als auch über mehrere Schichten erfassbar sind. So ist beispielsweise vorstellbar, dass erst wenigstens ein Bildaufnahme pro Zeiteinheit der Oberfläche von den jeweiligen Probeinhalten 6 gemacht wird, und anschließend schichtweise weitere Bildaufnahmen pro Zeiteinheit gemacht werden.

Insofern ist vorstellbar, dass mittels der vorgestellten Rheometervorrichtung 1 eine jeweilige Auswertung des rheologischen Verhaltens durch ein optisches oder spektroskopisches Verfahren an der oder an einer Oberfläche oder über mehrere Schichten durch die entsprechende Probe hinweg und somit über das gesamte Probenvolumen bestimmbar ist, in dem die Materialantwort von Volumenelementen oder Punkten im Material räumlich und zeitlich erfassbar ist.

Entsprechend der räumlich-zeitlich verteilten Materialantwort können somit rheologische Größen berechnet werden.

Die Rheometervorrichtung 1 ist zudem mit einer Auswerteeinheit 7 mit Auswerteprogramm 8 dargestellt, welche jeweils mit der wenigstens einen Messeinheit 2 und der Aufnahmevorrichtung 3 gekoppelt ist. Dabei ist die Auswerteeinheit 7 mittels einer ersten Verbindungsleitung 9 mit der Messeinheit 2 und mittels einer zweiten Verbindungsleitung 10 mit der Aufnahmevorrichtung 3 gekoppelt dargestellt. Alternativ zu den gezeigten Verbindungsleitungen 9, 10 sind auch Funkverbindungen vorstellbar, wobei dann die jeweiligen Komponenten entsprechend Mittel zum Senden und/oder Empfangen von Informationen umfassen. Das Auswerteprogramm 8 kann beispielsweise rheologische Modelle enthalten, die jeweils durch mathematische Anpassungen auf unterschiedliche Probengefäßgeometrien hin angepasst werden können.

Die Auswerteeinheit 7 mit Auswerteprogramm 8 kann beispielsweise wenigstens ein rheologisches Berechnungsmodell zur Berechnung von wenigstens einer rheologischen Eigenschaft der Probeinhalte 6 umfassen, wobei die Rheometervorrichtung 1 ausgelegt ist, eine automatische Auswahl der rheologischen Berechnungsmodelle in Abhängigkeit eines jeweils detektierten Probengefäßes 5 durchzuführen.

Die Rheometervorrichtung 1 ist zudem mit einer Prüfkammer 11 dargestellt. Diese Prüfkammer 11 ist stark vereinfacht dargestellt und so angeordnet, sodass sie die Aufnahmevorrichtung 3 mit Antriebseinheit 4 und die Messeinheit 2 einhaust. Lediglich die Auswerteeinheit 7 ist außerhalb der Prüfkammer 11 vorgesehen.

Mit anderen Worten sind diese Komponenten, also die Aufnahmevorrichtung 3 mit Antriebseinheit 4 und die Messeinheit 2 der Rheometervorrichtung 1, vollständig innerhalb der Prüfkammer 11 angeordnet dargestellt, sodass wenigstens eine Umgebungsbedingung der in der Prüfkammer 11 platzierten Probeinhalten 6 in den Probengefäßen 5 mittels der Prüfkammer 11 definiert regelbar ist. Die Prüfkammer 11 umfasst hierfür nicht näher dargestellte Mittel zur Regelung von Umgebungsbedingungen innerhalb dieser Prüfkammer 11.

In einer weiteren nicht näher dargestellten Ausführungsform der erfindungsgemäßen Rheometervorrichtung 1 ist jedoch vorstellbar, dass zumindest eine der zuvor genannten Bestandteile der Rheometervorrichtung 1 jeweils zumindest anteilig in der Prüfkammer 11 positionierbar ist, sodass wenigstens eine Umgebungsbedingung der in der Prüfkammer 11 platzierten Probeinhalten 6 in den Probengefäßen 5 mittels der Prüfkammer 11 definiert regelbar ist. Beispielsweise ist vorstellbar, dass die Antriebseinheit 4 nur anteilig in der Prüfkammer 11 vorgesehen ist.

Die regelbaren Umgebungsbedingungen innerhalb der Prüfkammer 11 können beispielsweise Temperatur, Druck, relative Luftfeuchtigkeit, (Inert-) Gasatmosphäre sein.

Die Rheometervorrichtung 1 ist zudem mit einer Beleuchtungseinheit 12 dargestellt, welche ebenfalls innerhalb der Prüfkammer 11 angeordnet dargestellt ist. Diese Beleuchtungseinheit 12 ist mit der Auswerteeinheit 7 mit Auswerteprogramm 8 über eine dritte Verbindungsleitung 13 gekoppelt vorgesehen, sodass die zu bemessenden Probeinhalte 6 in den unterschiedlichen Probengefäßen 5 während des Messvorgangs definiert beleuchtbar sind. Dadurch können Reaktionen im Material beziehungsweise in den jeweiligen zu bemessenden Probeinhalten 6 in den unterschiedlichen Probengefäßen 5 ausgelöst werden, welche das rheologische Verhalten verändern und rheologisch oder durch andere Methoden zum Beispiel simultan untersucht werden können.

In weiteren nicht näher dargestellten Ausführungsformen ist vorstellbar, dass mehr als eine Beleuchtungseinheit 12, beispielsweise zwei oder drei Beleuchtungseinheiten 12 vorgesehen sind. Diese Beleuchtungseinheiten 12 können gleichzeitig oder zeitversetzt oder sogar seriell aktiviert werden, sodass jeweilige Beleuchtungseffekte für die Messungen steuerbar beziehungsweise allgemein visuell gestaltbar, beispielsweise in Bezug auf eine Beleuchtungsdauer oder eine Beleuchtungsintensität, sind.

Diese wenigstens eine Beleuchtungseinheit 12 kann beispielsweise eine UV-Licht-Beleuchtungseinheit sein, welche steuerbar vorgesehen ist, sodass eine benutzerdefinierte Beleuchtung beziehungsweise benutzerdefinierte Beleuchtungseffekte bewirkbar sind.

Die Rheometervorrichtung 1 ist zudem mit einer weiteren Anregungseinheit 14 dargestellt, welche kontaktlos zu den Probengefäßen 5 angeordnet ist, sodass die Probeinhalte 6 in den unterschiedlichen Probengefäße 5 mittels der Anregungseinheit 14 kontaktlos definiert in Bewegung versetzbar sind. Diese Anregungseinheit 14 ist mit der Auswerteeinheit 7 über eine vierte Verbindungsleitung gekoppelt dargestellt. Alternativ zur bereitgestellten Funktion mittels der Anregungseinheit 14 ist vorstellbar, dass die erfindungsgemäße Rheometervorrichtung 1 derart kompakt und mobil ausgebildet ist, sodass sie problemlos in einem Flugzeug oder dergleichen, welches für Parabelflüge ausgebildet ist, angeordnet werden kann, sodass die erfindungsgemäße Rheometervorrichtung 1 bei einem Parabelflug nutzbar ist und somit die wirkenden Gravitationskräfte beziehungsweise deren sich verändernde Einflüsse während solch eines Parabelfluges für durchzuführende Messungen im Sinne der bereits ausgeführten Arten und Weisen nutzbar gemacht werden können. Alternativ ist auch eine Verwendung in einer Zentrifuge vorstellbar, wobei die erfindungsgemäße Rheometervorrichtung 1 entsprechend für solch einen Einsatzzweck ausgebildet sein kann.

In weiteren nicht näher dargestellten Ausführungsformen ist vorstellbar, dass mehr als eine Anregungseinheit 14, beispielsweise zwei oder drei Anregungseinheiten 14 vorgesehen sind. Die Anregungseinheit 14 kann beispielsweise eine elektromagnetische Anregungseinheit sein.

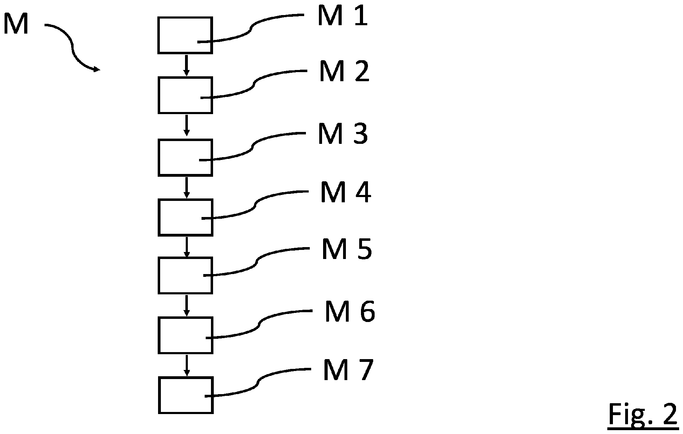

Fig. 2 zeigt ein schematisches Flussdiagramm für ein Verfahren M zur Ermittlung von rheologischen Eigenschaften von Proben gemäß einem Ausführungsbeispiel der vorliegenden Erfindung.

In einem ersten Verfahrensschritt M1 wird eine erfindungsgemäße Rheometervorrichtung 1 bereitgestellt. In einem zweiten Verfahrensschritt M2 werden mehrere, sich teilweise voneinander unterscheidende Probengefäßen 5 mit jeweiligen Probeinhalten 6 auf einer für diese Zwecke ausgelegten Aufnahmevorrichtung 3 der erfindungsgemäßen Rheometervorrichtung 1 platziert.

In einem dritten Verfahrensschritt M3 wird die Aufnahmevorrichtung 3 aktiviert. In einem vierten Verfahrensschritt M4 wird wenigstens eine Messeinheit 2 der erfindungsgemäßen Rheometervorrichtung 1 mit der Aufnahmevorrichtung 3 aktiviert und gekoppelt.

In einem fünften Verfahrensschritt M5 wird eine Auswerteeinheit 7 mit Auswerteprogramm 8 der erfindungsgemäßen Rheometervorrichtung 1 mit der Aufnahmevorrichtung 3 und der wenigstens einen Messeinheit 2 aktiviert und gekoppelt.

In einem sechsten Verfahrensschritt M6 werden rheologische Messungen an einer Vielzahl von Probeinhalten 6 in den jeweiligen Probengefäßen 5 mittels der wenigstens einen Messeinheit 2 parallel durchgeführt. In einem siebten Verfahrensschritt M7 werden durchgeführte Messungen mittels der Auswerteeinheit 7 mit Auswerteprogramm 8 der erfindungsgemäßen Rheometervorrichtung 1 in Echtzeit ausgewertet und ausgegeben.

### Liste der Referenzzeichen

- 1: Rheometervorrichtung
- 2: Messeinheit
- 3: Aufnahmevorrichtung
- 4: Antriebseinheit
- 5: Probengefäß
- 6: Probeninhalt
- 7: Auswerteeinheit
- 8: Auswerteprogramm
- 9: erste Verbindungsleitung
- 10: zweite Verbindungsleitung
- 11: Prüfkammer
- 12: Beleuchtungseinheit
- 13: dritte Verbindungsleitung
- 14: Anregungseinheit
- 15: vierte Verbindungsleitung
- M: Verfahren
- M1 - M7: Verfahrensschritte

## Patentansprüche

1. Rheometervorrichtung (1) zur Ermittlung von rheologischen Eigenschaften von Proben umfassend wenigstens eine Messeinheit (2), eine Aufnahmevorrichtung (3) mit wenigstens einer Antriebseinheit (4) und eine Auswerteeinheit (7) mit Auswerteprogramm (8), welche jeweils mit der wenigstens einen Messeinheit (2) und der Aufnahmevorrichtung (3) gekoppelt ist, wobei die Aufnahmevorrichtung (3) ausgelegt ist, mehrere, sich zumindest teilweise voneinander unterscheidende Probengefäße (5) mit jeweiligen Probeinhalten (6) aufzunehmen und definiert zu bewegen, sodass simultan Messungen an einer Vielzahl von Probeinhalten (6) in den jeweiligen Probengefäßen (5) parallel durchführbar sind.

2. Rheometervorrichtung (1) gemäß Anspruch 1, wobei die wenigstens eine Messeinheit (2) oberhalb der Aufnahmevorrichtung (3) angeordnet ist, sodass kontaktlose Messungen an der Vielzahl von Probeinhalten (6) in den jeweiligen Probengefäßen (5) durchführbar sind.

3. Rheometervorrichtung (1) gemäß Anspruch 1 oder Anspruch 2, wobei die wenigstens eine Messeinheit (2) ausgewählt ist aus: Kameravorrichtung, Mikroskopvorrichtung, Fluoreszenzmikroskop, Ramanvorrichtung.

4. Rheometervorrichtung (1) gemäß einem der vorherigen Ansprüche, wobei die Aufnahmevorrichtung (3) mittels wenigstens einer Antriebseinheit (4) definiert in wenigstens eine Richtung bewegbar ist, sodass diese Bewegungen an in der Aufnahmevorrichtung (3) platzierte Probengefäße (5) zumindest anteilig übertragbar sind und somit die Probeinhalte (6) in den Probengefäßen (5) definiert in Bewegung versetzbar sind.

5. Rheometervorrichtung (1) gemäß einem der vorherigen Ansprüche, wobei die unterschiedlichen Probengefäße (5) ausgewählt sind aus: Well-Platten, Mikrofluidkammern, Well-Platten mit integrierten Mikrofluidkammern, 96-Well-Platten, 384-Well-Platten, Fläschchen für Medikamente, Falcon-Röhrchen, Objektträger.

6. Rheometervorrichtung (1) gemäß einem der vorherigen Ansprüche, wobei wenigstens zwei Messeinheiten (2) parallel aktivierbar sind, sodass zumindest teilweise eine parallele Auswertung der jeweiligen Messungen der wenigstens zwei Messeinheiten (2) mittels der Auswerteeinheit (7) mit Auswerteprogramm (8) in Echtzeit durchführbar ist.

7. Rheometervorrichtung (1) gemäß einem der vorherigen Ansprüche, wobei die Rheometervorrichtung (1) wenigstens eine mit der Auswerteeinheit (7) mit Auswerteprogramm (8) koppelbare Beleuchtungseinheit (12) umfasst, sodass die zu bemessenden Probeinhalte (6) in den unterschiedlichen Probengefäßen (5) während des Messvorgangs definiert beleuchtbar sind.

8. Rheometervorrichtung (1) gemäß Anspruch 7, wobei die wenigstens eine Beleuchtungseinheit (12) ausgewählt ist aus: UV-Licht-Beleuchtungseinheit, Beleuchtungseinheit, welche ausgelegt ist, sichtbares Licht zu emittieren, Beleuchtungseinheit, welche ausgelegt ist, infrarotes Licht zu emittieren, Beleuchtungseinheit, welche ausgelegt ist, polarisiertes Licht zu emittieren, Beleuchtungseinheit, welche ausgelegt ist, fluoreszierendes Licht, insbesondere blaues, grünes oder rotes fluoreszierendes Licht, zu emittieren.

9. Rheometervorrichtung (1) gemäß einem der vorherigen Ansprüche, wobei die Rheometervorrichtung (1) wenigstens eine weitere Anregungseinheit (14), welche kontaktlos zu den Probengefäßen (5) angeordnet ist, umfasst, sodass die Probeinhalte (6) in den unterschiedlichen Probengefäße (5) mittels der wenigstens einen weiteren Anregungseinheit (14) kontaktlos definiert in Bewegung versetzbar sind.

10. Rheometervorrichtung (1) gemäß Anspruch 9, wobei die wenigstens eine weitere Anregungseinheit (14) ausgewählt ist aus: elektromagnetische Anregungseinheit.

11. Rheometervorrichtung (1) gemäß einem der vorherigen Ansprüche, wobei die Rheometervorrichtung (1) eine Prüfkammer (11) mit Mitteln zur Regelung von Umgebungsbedingungen innerhalb dieser Prüfkammer (11) umfasst, in welcher zumindest eine der zuvor genannten Bestandteile der Rheometervorrichtung (1) jeweils zumindest anteilig positionierbar ist, sodass wenigstens eine Umgebungsbedingung der in der Prüfkammer (11) platzierten Probeinhalten (6) in den Probengefäßen (5) mittels der Prüfkammer (11) definiert regelbar ist.

12. Rheometervorrichtung (1) gemäß Anspruch 10, wobei die regelbaren Umgebungsbedingungen innerhalb der Prüfkammer (11) ausgewählt sind aus: Temperatur, Druck, relative Luftfeuchtigkeit, (Inert-) Gasatmosphäre.

13. Rheometervorrichtung (1) gemäß einem der vorherigen Ansprüche, wobei die Auswerteeinheit (7) mit Auswerteprogramm (8) wenigstens ein rheologisches Berechnungsmodell zur Berechnung von wenigstens einer rheologischen Eigenschaft der Probeinhalte (6) umfasst, wobei die Rheometervorrichtung (1) ausgelegt ist, eine automatische Auswahl der rheologischen Berechnungsmodelle in Abhängigkeit eines jeweils detektierten Probengefäßes (5) durchzuführen.

14. Verfahren zur Ermittlung von rheologischen Eigenschaften von Proben umfassend die folgenden Schritte:
• Bereitstellen einer Rheometervorrichtung (1) gemäß einem der Ansprüche 1 bis 13;
• Platzieren von mehreren, sich zumindest teilweise voneinander unterscheidenden Probengefäßen (5) mit jeweiligen Probeinhalten (6) auf einer für diese Zwecke ausgelegten Aufnahmevorrichtung (3) der Rheometervorrichtung (1);
• Aktivieren der Aufnahmevorrichtung (3);
• Aktivieren und Koppeln wenigstens einer Messeinheit (2) der Rheometervorrichtung (1) mit der Aufnahmevorrichtung (3);
• Aktivieren und Koppeln einer Auswerteeinheit (7) mit Auswerteprogramm (8) der Rheometervorrichtung (1) mit der Aufnahmevorrichtung (3) und der wenigstens einen Messeinheit (2);
• Paralleles und optional simultanes Durchführen von rheologischen Messungen an einer Vielzahl von Probeinhalten (6) in den jeweiligen Probengefäßen (5) mittels der wenigstens einen Messeinheit (2);
• Auswerten und Ausgeben der durchgeführten Messungen mittels der Auswerteeinheit (7) mit Auswerteprogramm (8) der Rheometervorrichtung (1) in Echtzeit.

15. Verfahren gemäß Anspruch 14, wobei die wenigstens eine Messeinheit (2) oberhalb der Aufnahmevorrichtung (3) angeordnet wird, sodass ein kontaktloses Messen an der Vielzahl von Probeinhalten (6) durchgeführt werden kann.

16. Verfahren gemäß einem der Ansprüche 14 oder 15, wobei Bewegungen der Aufnahmevorrichtung (3) mittels wenigstens einer Antriebseinheit (4) der Aufnahmevorrichtung (3) bewirkt werden und zumindest anteilig auf die Probengefäße (5) und somit auf die in den Probengefäßen (5) vorhandenen Probeinhalte (6) definiert übertragen werden, wobei jeweilige Messungen der wenigstens einen Messeinheit in Abhängigkeit der jeweiligen Bewegungen durchgeführt werden.

17. Verfahren gemäß einem der Ansprüche 14 bis 16, wobei jeweilige Messungen mittels wenigstens zwei parallel aktivierter Messeinheiten durchgeführt werden, sodass zumindest teilweise eine parallele Auswertung der jeweiligen Messungen der wenigstens zwei Messeinheiten (2) mittels der Auswerteeinheit (7) mit Auswerteprogramm (8) in Echtzeit durchgeführt werden kann.

18. Verfahren gemäß einem der Ansprüche 14 bis 17, wobei die zu bemessenden Probeinhalte (6) in den unterschiedlichen Probengefäßen (5) während des Messvorgangs definiert mittels wenigstens einer mit der Auswerteeinheit (7) mit Auswerteprogramm (8) koppelbaren Beleuchtungseinheit (12) der Rheometervorrichtung (1) beleuchtet werden.

19. Verfahren gemäß einem der Ansprüche 14 bis 18, wobei wenigstens eine weitere Anregungseinheit (14) der Rheometervorrichtung (1) aktiviert wird, welche kontaktlos zu den Probengefäßen (5) angeordnet wird oder welche zumindest teilweise in Kontakt zu den Probegefäßen (5) oder zu den Probeinhalten (6) oder zumindest teilweise in Kontakt zu den Probegefäßen (5) und zumindest teilweise zu den Probeinhalten (6) angeordnet wird, sodass die Probeinhalte (6) in den unterschiedlichen Probengefäßen (5) mittels der weiteren Anregungseinheit (14) kontaktlos definiert in Bewegung versetzt werden können.

20. Verfahren gemäß einem der Ansprüche 14 bis 19, wobei wenigstens ein rheologisches Berechnungsmodell zur Berechnung von wenigstens einer rheologischen Eigenschaft der Probeinhalte (6) durch die Auswerteeinheit (7) mit Auswerteprogramm (8) in Abhängigkeit eines jeweils mittels der Rheometervorrichtung (1) detektierten Probengefäßes (5) ausgewählt wird.
